# FASCICULE DE BREVET EUROPEEN

(11) **EP 0 536 029 B1**
(45) Date de publication et mention de la délivrance du brevet: **21.08.1996**
(21) Numéro de dépôt: 92402637.0
(22) Date de dépôt: 25.09.1992
(51) Int. Cl.: D03D 41/00, B29C 70/00

(54) **Procédé et machine pour la réalisation d'armatures fibreuses creuses**
Verfahren und Maschine zur Herstellung von gewebten faserförmigen Armierungen
Process and machine for the formation of fibrous armatures

(30) Priorité: 03.10.1991 FR 9112169
(43) Date de publication de la demande: 07.04.1993
(73) Titulaire: AEROSPATIALE Société Nationale Industrielle, F-75781 Paris Cédex 16 (FR)
(72) Inventeur: Cahuzac, Georges Jean Joseph, F-33110 Le Bouscat (FR)
(74) Mandataire: Bonnetat, Christian

(56) Documents cités:
- EP-A- 0 281 446
- DE-A- 3 819 708
- FR-A- 2 227 748

## Description

La présente invention concerne un procédé et une machine pour la réalisation d'armatures creuses formées de fibres distribuées selon trois dimensions. Elle concerne également les armatures ainsi réalisées et les pièces composites obtenues à partir desdites armatures imprégnées d'un liant durcissable.

Pour obtenir de telles armatures, on connaît déjà des procédés consistant à réaliser, par enroulement sur un mandrin, un substrat bidimensionnel dans lequel lesdites fibres sont distribuées selon au moins deux directions, la troisième dimension des fibres étant rapportée par piquage dudit substrat. De tels procédés sont par exemple décrits dans les brevets américains US-A-2 283 802, US-A-3 322 868, US-A-4 080 915 et US-A-4 863 660. Ils présentent des inconvénients dus essentiellement à la présence du mandrin lors du piquage.

Par exemple, dans le brevet américain US-A-4 080 915 dans lequel ledit support est rigide, on prévoit d'aménager dans celui-ci des ouvertures, afin de permettre à l'extrémité de l'aiguille d'y pénétrer sans se briser. On remarquera qu'une telle solution limite fortement les possibilités de piquage, puisque le nombre d'ouvertures pratiquées dans le support est forcément limité et qu'il est impératif que, à chaque point, ladite aiguille se trouve en regard d'une telle ouverture. Ainsi, dans ce brevet antérieur, on prévoit que les ouvertures sont des fentes allongées et que les lignes de piquage sont rectilignes, en correspondance avec lesdites fentes. On voit donc que, non seulement la densité des points de piquage sur le substrat ne peut être que faible, mais encore que la forme des lignes de piquage et la distribution des points de piquage sont imposées une fois pour toutes par lesdites ouvertures.

En revanche, dans le brevet américain US-A-4 863 660, on prévoit de réaliser le support en une matière mousse ou analogue, permettant la pénétration de la pointe de l'aiguille. Dans ce cas, on n'est plus limité en ce qui concerne la densité des points de piquage ou la forme des lignes de piquage, mais il est nécessaire de réaliser le support en une matière aisément destructible, pour pouvoir dégager le substrat dudit support.

Pour réaliser des armatures creuses à l'aide de fibres, on connaît également des procédés s'affranchissant de l'usage d'un mandrin et consistant à tisser des fibres autour de tiges ou baguettes formant un réseau. De tels procédés de tissage sont par exemple décrits dans les brevets français FR-A-2 395 340, FR-A-2 529 589, FR-A-2 531 459 et FR-A-2 227 748. Dans ce cas, les machines construites pour la mise en oeuvre de tels procédés sont complexes et coûteuses. De plus, le mode de tissage obtenu est imposé par ledit réseau de tiges. Plus particulièrement, FR-A-2 227 748 permet de réaliser une armature de révolution par tissage de trois faisceaux constituant un réseau tridimensionnel et formés de tiges souples (fils rigides, baguettes) dans le sens des génératrices de l'armature et de fils dans le sens radial et circonférentiel de celle-ci.

La présente invention a pour objet de remédier aux inconvénients des deux types de procédé connus et de permettre la réalisation d'armatures filamentaires creuses au moyen d'une machine simple, le tissage obtenu pouvant être de tout type désiré. De plus, grâce à l'invention, l'usage d'un mandrin n'entraîne ni difficulté de mise en oeuvre, ni limitation du mode de tissage.

A cette fin, selon l'invention, le procédé pour la réalisation d'une armature fibreuse creuse à l'aide d'un mandrin est remarquable en ce que :
- on répartit, à la périphérie dudit mandrin, une pluralité de tiges souples, pourvues à l'une de leurs extrémités d'un bout recourbé, de façon qu'au moins lesdites extrémités à bout recourbé soient appliquées contre ledit mandrin avec leur bout recourbé faisant saillie vers l'extérieur par rapport audit mandrin ;
- on enroule au moins une mèche de filaments continue autour des bouts recourbés desdites tiges ; et
- au fur et à mesure de l'enroulement de ladite mèche de filaments autour desdits bouts recourbés, on déplace lesdites tiges le long dudit mandrin pour dégager de ladite mèche de filaments déjà enroulée lesdits bouts recourbés desdites tiges, de sorte que l'on forme progressivement un entrelacs de filaments incorporant lesdites tiges et s'appuyant contre ledit mandrin.

Ainsi, dans le procédé conforme à la présente invention, ledit mandrin sert uniquement d'appui auxdits bouts recourbés pour imposer la position spatiale de ceux-ci et donc la forme de l'armature obtenue par enroulement de la mèche de filaments autour desdits bouts recourbés. Il n'y a aucune interférence entre la mèche de filaments et le mandrin, autre que celle consistant pour le mandrin à servir de gabarit pour le tissage. On évite donc les inconvénients des procédés connus à mandrin, rappelés ci-dessus. Par ailleurs, le mode de tissage obtenu résulte uniquement de la disposition des tiges sur le mandrin et de la façon dont la ou les mèches de filaments continues sont enroulées autour desdits bouts recourbés. On conçoit aisément que l'on puisse choisir à volonté un grand nombre de modes d'enroulement et donc de tissages différents.

Suivant le mode de tissage désiré, on peut disposer lesdites tiges souples, à la périphérie du mandrin, de façon que leurs bouts recourbés soient au même niveau le long de l'axe dudit mandrin, ou bien soient étagés le long dudit axe. Par exemple, on peut prévoir que ladite pluralité de tiges souples est composée de plusieurs ensembles de tiges, les bouts recourbés des tiges d'un ensemble étant tous au même niveau le long de l'axe dudit mandrin, mais chacun desdits ensembles présentant les bouts recourbés de ses tiges à un niveau différent de celui des autres ensembles. On voit que, de la sorte, on peut grandement faire varier le mode de tissage, d'autant plus qu'il est possible de choisir à volonté le nombre des mèches de filaments continues enroulées.

Par exemple, les tiges de plusieurs desdits ensembles de tiges à bouts recourbés étagés forment des groupes radiaux dans lesquels lesdites tiges sont radialement superposées. Ces groupes de tiges radialement superposées peuvent comporter, alternativement le long de la périphérie dudit mandrin, des nombres de tiges superposées différents. De plus, les tiges de groupes périphériquement consécutifs peuvent être décalées radialement, de façon, par exemple, à ce que, dans deux groupes périphériquement consécutifs, les tiges du groupe le moins nombreux sont radialement disposées entre deux tiges du groupe le plus nombreux.

Lesdites tiges souples peuvent être constituées en une matière (par exemple la même que celle de la ou des mèches de filaments enroulées) telle qu'elles peuvent être maintenues en place dans l'armature ainsi réalisée, après démontage de celle-ci dudit mandrin, pour constituer les fils de chaîne de ladite armature. Au contraire, lesdites tiges souples peuvent être constituées en une matière (par exemple métallique) telle qu'il est nécessaire de les remplacer par des fibres de nature appropriée. Dans ce dernier cas, il est avantageux, avant démontage de l'armature du mandrin, de tirer lesdites fibres de remplacement à l'intérieur de l'armature au moyen desdites tiges souples, au moment de la séparation de celles-ci de ladite armature.

Bien que le mandrin puisse être fixe, la mèche de filaments étant enroulée sur lesdits bouts recourbés en se déplaçant autour dudit mandrin, il est avantageux que le mandrin soit rotatif, l'enroulement de la ou des mèches de filaments résultant de la rotation dudit mandrin.

Il est de plus avantageux, à des fins de simplification de mise en oeuvre du procédé selon l'invention, de prévoir une surface de butée pour les extrémités des tiges opposées auxdits bouts recourbés, ainsi que de déplacer ledit mandrin, au fur et à mesure de l'enroulement de la mèche de filaments, en direction de ladite surface de butée.

Ainsi, lesdites tiges, solidaires dudit mandrin lors dudit déplacement à cause de la pression exercée par l'enroulement déjà effectué de ladite mèche de filaments, viennent en butée contre ladite surface de butée par leurs extrémités opposées aux bouts recourbés, de sorte qu'elles sont obligées de coulisser par rapport au mandrin et à l'enroulement déjà effectué, en dégageant lesdits bouts recourbés de ce dernier, ce qui permet la poursuite dudit enroulement.

La présente invention concerne de plus une machine pour la réalisation d'une armature fibreuse creuse à l'aide d'un mandrin, comportant une pluralité de tiges souples et des moyens d'enroulement pour enrouler au moins une mèche de filaments continue et remarquable en ce que :
- lesdites tiges souples sont pourvues à l'une de leurs extrémités d'un bout recourbé et sont réparties à la périphérie dudit mandrin, au moins lesdites extrémités à bouts recourbés étant appliquées contre ledit mandrin avec leur bout recourbé faisant saillie vers l'extérieur ;
- lesdits moyens d'enroulement enroulent ladite mèche de filaments continue autour des bouts recourbés desdites tiges ; et
- il est prévu des moyens pour déplacer lesdites tiges le long dudit mandrin au fur et à mesure de l'enroulement de ladite mèche de filaments.

De préférence, lesdits moyens d'enroulement comportent des moyens pour entraîner ledit mandrin en rotation autour de son axe et des moyens à poste fixe pour déposer ladite mèche de filaments sur ledit mandrin rotatif, autour desdits bouts recourbés desdites tiges.

L'axe de rotation dudit mandrin peut être vertical.

Dans un mode de réalisation avantageux de la présente invention, lesdits moyens pour déplacer lesdites tiges le long du mandrin au fur et à mesure de l'enroulement de ladite mèche de filaments comportent une surface de butée pour les extrémités desdites tiges opposées auxdits bouts recourbés et des moyens pour déplacer ledit mandrin, au fur et à mesure de l'enroulement de ladite mèche de filaments, en direction de ladite surface de butée.

Pour faciliter le déplacement des tiges le long du mandrin, ladite surface de butée présente avantageusement la forme d'une rampe, s'élevant progressivement dans le sens de la rotation du mandrin. Afin de faciliter encore plus le déplacement desdites tiges, ladite rampe peut être vibrée, de façon à lui communiquer un mouvement de vibration dans le sens de la longueur desdites tiges.

Dans un mode de réalisation de la machine conforme à la présente invention, lesdits moyens pour entraîner ledit mandrin en rotation autour de son axe et lesdits moyens pour déplacer ledit mandrin en direction de ladite surface de butée sont combinés en un vérin, entraîné en rotation autour de son axe.

En variante, lesdits moyens pour entraîner ledit mandrin en rotation autour de son axe et lesdits moyens pour déplacer ledit mandrin en direction de ladite surface de butée comportent un disque monté rotatif par rapport à un plateau, susceptible de se déplacer parallèlement à son plan.

Comme mentionné ci-dessus, ladite pluralité de tiges souples peut être composée de plusieurs ensembles de tiges, les bouts recourbés des tiges d'un ensemble étant tous au même niveau le long de l'axe dudit mandrin, mais chacun desdits ensembles présentant les bouts recourbés de ses tiges à un niveau différent de celui des autres ensembles. Dans ce cas, il est avantageux que la machine comporte plusieurs guide-fil, dont chacun d'eux est susceptible de déposer une mèche de filaments continue sur ledit mandrin, autour de bouts recourbés desdites tiges. Tous les guide-fil sont alors, de préférence, mécaniquement solidaires les uns des autres.

Avantageusement, lesdits moyens à poste fixe pour déposer la mèche de filaments sur le mandrin rotatif comportent une tête de dépose, pourvue d'un capteur mesurant la distance entre ladite tête de dépose et ledit mandrin, d'un capteur détectant le défilement périphérique desdites tiges et d'un capteur détectant lesdits bouts recourbés des tiges. Grâce aux informations délivrées par ces capteurs, il est donc possible de piloter la machine conforme à l'invention par l'intermédiaire d'un automate programmable.

De préférence, ladite tête de dépose comporte au moins un guide-fil pour ladite mèche de filaments, ainsi que des moyens pour déplacer, par rapport à ladite tête, ledit guide-fil parallèlement auxdites tiges. Il est ainsi possible de faire passer ladite mèche de filaments, à volonté, au-dessus ou au-dessous desdits bouts recourbés. Avantageusement, ladite tête de dépose est orientable.

Un procédé selon l'invention est revendiqué aux revendications 1-12. Une machine selon l'invention est revendiquée aux revendications 13-25.

Les figures du dessin annexé feront bien comprendre comment l'invention peut être réalisée. Sur ces figures, des références identiques désignent des éléments semblables.

La figure 1 montre schématiquement un premier mode de réalisation de la machine conforme à la présente invention.

La figure 2 illustre en perspective un mode de tissage pouvant être obtenu par la mise en oeuvre de la machine de la figure 1.

La figure 3 est une vue d'un détail de la machine de la figure 1, suivant la flèche III de cette figure.

Les figures 4A, 4B, 4C et 4D illustrent quatre étapes du procédé conforme à la présente invention.

La figure 5 montre ledit tissage dans un plan orthogonal aux tiges, supposé déroulé.

La figure 6 illustre, en vue analogue à celle de la figure 5, le tissu obtenu.

La figure 7 illustre une variante de disposition des tiges souples sur le mandrin, associée à une pluralité de guide-fil.

La figure 8 montre, en coupe déroulée, un tissage susceptible d'être obtenu avec le dispositif de la figure 7.

La figure 9 est une vue en perspective représentant une variante de réalisation de la machine conforme à la présente invention.

Les figures 10 et 11 sont des vues, respectivement de côté et en perspective, d'une tête de dépose de mèche de filaments pour la machine conforme à la présente invention.

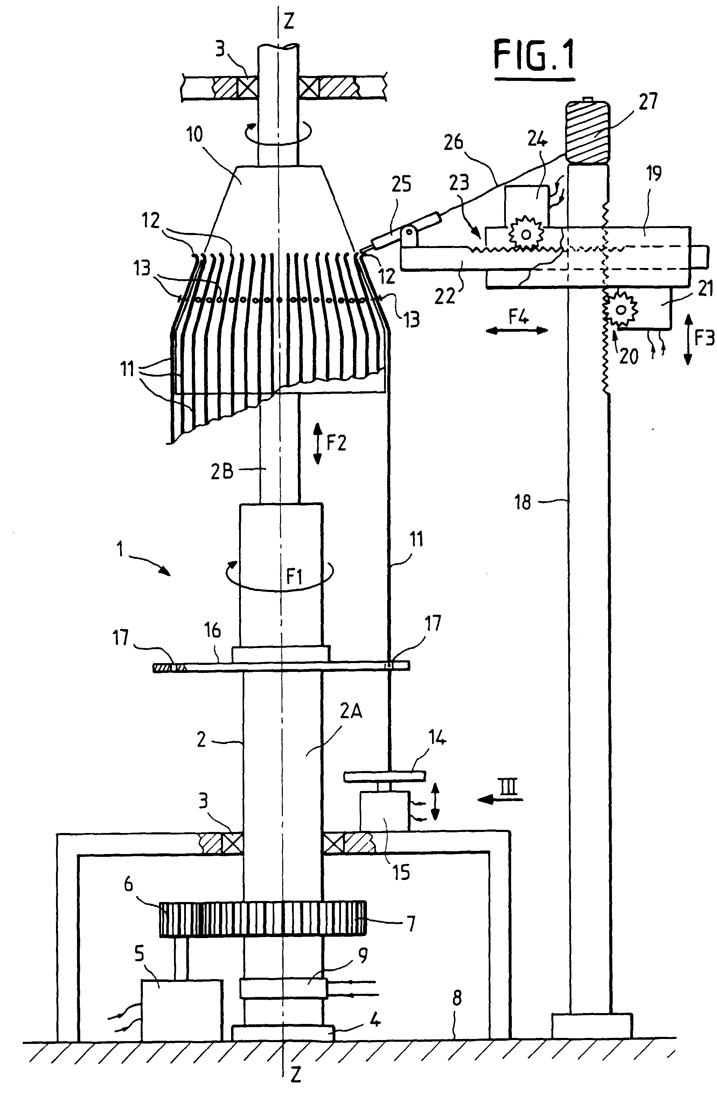

L'exemple de réalisation 1 de la machine, conforme à la présente invention et montré par la figure 1, comporte un vérin 2, par exemple électrique, dont l'axe Z-Z est disposé verticalement. Le vérin 2 est monté rotatif autour dudit axe vertical Z-Z, grâce à des paliers 3 et une butée à billes 4 et il peut être entraîné en rota!0 tion autour dudit axe (voir la flèche F1) par un moteur 5, par exemple électrique, faisant tourner un pignon 6 engrénant avec une couronne dentée 7, coaxiale à l'axe Z-Z et solidaire du cylindre 2A du vérin 2. Ledit cylindre 2A repose sur le sol 8 par la butée à billes 4 et la tige 2B dudit vérin 2 est dirigée vers le haut. Le vérin 2 est alimenté en énergie par l'intermédiaire d'un distributeur tournant 9. Lorsqu'il est alimenté, le vérin 2 peut au choix rétracter sa tige 2B vers le bas ou la pousser vers le haut, comme cela est illustré par 30 la double flèche F2.

Sur la tige 2B du vérin 2 est monté un mandrin 10, dont la forme extérieure correspond à la forme intérieure d'une armature fibreuse creuse à réaliser. L'axe du mandrin 10 est disposé coaxialement à l'axe Z-Z. Sur la figure 1, ce mandrin présente une forme de révolution comportant une partie cylindrique et une partie tronconique. Comme cela ressortira de la suite de la description, la présente invention peut être mise en oeuvre avec des mandrins de formes différentes, même non de révolution.

A la périphérie du mandrin 10 sont réparties une pluralité de tiges 11, transversalement souples, mais longitudinalement rigides, pourvues à leur extrémité supérieure d'un bout recourbé 12. De la façon expliquée ci-après, les tiges 11 sont maintenues appliquées contre le mandrin 10. Dans l'exemple représenté sur la figure 1, chaque tige 11 est disposée dans un plan axial du mandrin. Chaque tige 11 peut coulisser par rapport au mandrin 10. Les tiges 11 peuvent être maintenues périphériquement espacées les unes des autres sur ledit mandrin grâce à des entretoises 13, par exemple des clous ou analogues plantés dans ledit mandrin.

Chaque tige 11 se prolonge vers le bas, de façon que son extrémité inférieure puisse venir contacter une lame vibrante 14, mise en mouvement par un vibreur électrique 15. Pour guider les parties inférieures des tiges 11 et les obliger à garder leurs positions respectives, on prévoit un disque 16, solidaire en rotation du vérin 2 et pourvu à sa périphérie de trous individuels 17, à travers chacun desquels passe une tige 11.

Ainsi, l'ensemble des tiges 11 forme une enveloppe entourant le mandrin 10 et le vérin 2.

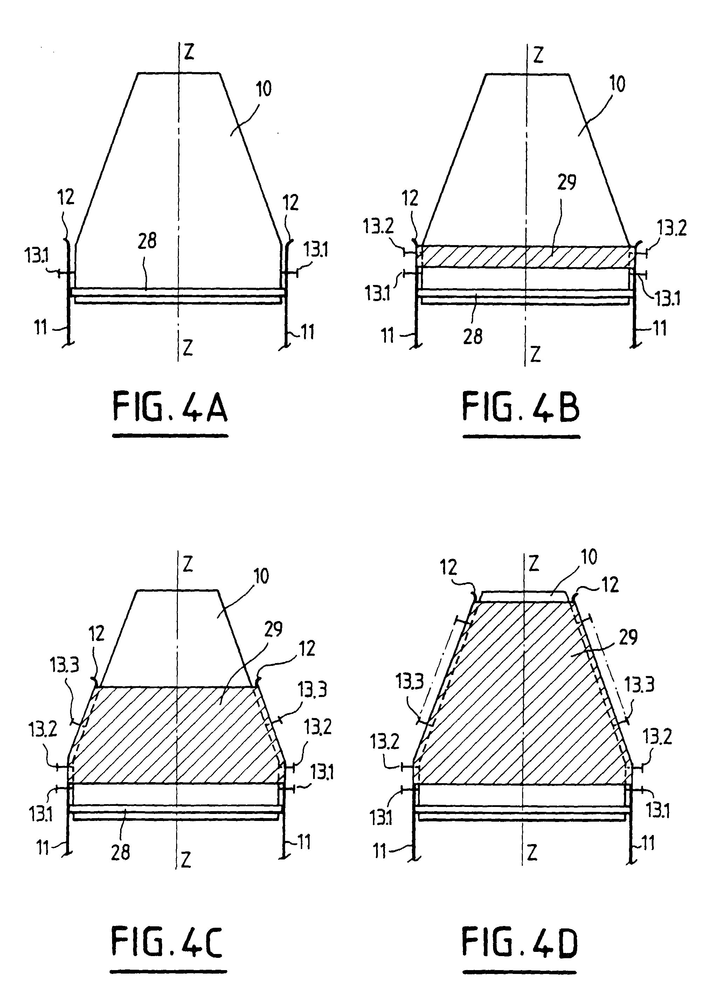

Sur la figure 1, à des fins de clarté du dessin, les parties inférieures des tiges 11 ont été coupées, sauf pour une seule d'entre elles. Par ailleurs, pour des commodités d'exposé et de dessin, on a représenté sur la figure 1 la machine à un stade avancé de tissage sans montrer ledit tissage. Ceci apparaîtra clairement de la description en regard des figures 4A à 4D.

De plus, la machine 1 de la figure 1 comporte une colonne verticale à la partie supérieure de laquelle est monté un chariot 19, pouvant coulisser le long de ladite colonne (flèche F3), par exemple grâce à un dispositif à pignon et crémaillère 20 mû par un moteur 21 porté par ledit chariot 19.

Le chariot 19 porte en outre un bras horizontal 22, pouvant coulisser par rapport audit chariot 19 (flèche F4), par exemple également grâce à un dispositif à pignon et crémaillère 23 mû par un moteur 24 porté par ledit chariot 19.

L'extrémité du bras horizontal 22, disposée en regard du mandrin 10 porte un guide-fil 25, de préférence orientable, à travers lequel passe une mèche de filaments 26 se dévidant librement d'une bobine 27, par exemple portée par la colonne 18.

Le vérin 2, les moteurs 5,21,24 et le vibreur 15 sont alimentés à partir d'une ou plusieurs sources d'énergie non représentées. Bien entendu, les commandes de ces divers organes peuvent être effectuées par un dispositif centralisé, tel qu'un calculateur ou automate programmable, également non représenté.

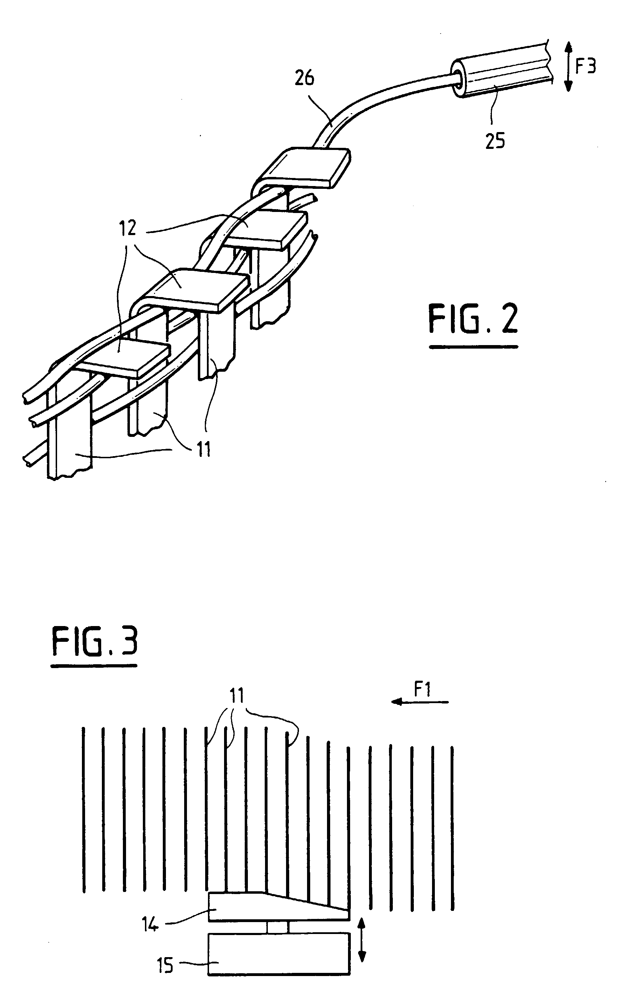

Comme l'illustre la figure 2, les moteurs 21 et 24 sont commandés pour amener le guide-fil 25 en regard des bouts recourbés 12 des tiges 11, ledit guide-fil étant orienté de façon convenable. Le vérin 2 étant mis en rotation autour de l'axe Z-Z grâce aux moyens moteurs 5,6,7, lesdits bouts recourbés 12 défilent devant le guide-fil 25. Celui-ci, étant animé d'un mouvement alternatif vertical (flèche F3) grâce à la commande du moteur 21, la mèche de filaments 26 peut être amenée à passer au-dessus ou au-dessous desdits bouts recourbés 12 lors de son application sur le mandrin 10. Sur la figure 2, on a supposé que la mèche de filaments passait alternativement au-dessus et au-dessous desdits bouts recourbés 12.

Avant de commencer le tissage tel que représenté sur la figure 2, on prépare le mandrin 10 et les tiges 11, comme cela est par exemple représenté sur la figure 4A. Sur cette dernière figure, on a supposé que toutes les tiges 11 étaient identiques et que tous les bouts recourbés 12 se trouvaient initialement au même niveau horizontal le long de l'axe Z-Z. Les extrémités supérieures des tiges 11 sont maintenues appliquées contre le mandrin 10 par un lien élastique 28 les entourant. De plus, un premier ensemble 13.1 d'entretoises 13 est disposé au voisinage des bouts recourbés 12.

On tire alors la mèche de filaments 26 du guide-fil et on en fixe l'extrémité libre sur le mandrin, par exemple à une entretoise 13 de l'ensemble 13.1. Ensuite, on commence le tissage tel qu'expliqué en regard de la figure 2.

Au fur et à mesure de l'enroulement de la mèche de filaments 26 autour des bouts recourbés 12, le vérin 2 est commandé (par l'intermédiaire du distributeur 9) pour rétracter sa tige 2B. Il en résulte une descente du mandrin 10. Les tiges 11, étant liées au mandrin 10 par le lien élastique 28 et par les spires de la mèche de filaments 26 déjà enroulées, sont entraînées dans la descente dudit mandrin 10. Cependant, les extrémités inférieures des tiges 11 venant au contact, au cours de leur descente, avec la lame vibrante 14, celle-ci oblige lesdites tiges 11 à remonter en glissant par rapport au mandrin et par rapport aux spires d'enroulement de la mèche de filaments 26 déjà effectuées. Comme on peut le voir sur la figure 3, la lame vibrante 14 présente, périphériquement à l'ensemble des tiges 11, un profil en rampe facilitant la remontée des tiges 11. Ainsi, lesdites spires de la mèche de filaments 26 glissent vers le bas des tiges 11, tandis que les bouts recourbés de celles-ci restent dégagés pour recevoir la suite de l'enroulement de la mèche de filaments 26. La descente du mandrin le long de l'axe Z-Z et celle des spires de la mèche de filaments 26 le long des tiges 11 sont continues pendant l'enroulement de la mèche de filaments 26 sur les bouts recourbés 12.

On obtient ainsi progressivement la formation d'un tissage 29 formé d'un entrelacs de filaments incorporant les tiges 11 et s'appuyant contre le mandrin 10.

Les figures 4B, 4C et 4D illustrent trois états différents de ce tissage. On peut y voir que, de place en place, au cours dudit tissage, on place des ensembles successifs 13.2, 13.3, ... d'entretoises 13 pour guider les extrémités supérieures des tiges 11 au fur et à mesure de leur coulissement le long du mandrin 10. On remarquera que les entretoises 13 des différents ensembles 13.1, 13.2, 13.3, ... permettent de plus de soutenir verticalement les spires dudit tissage 29.

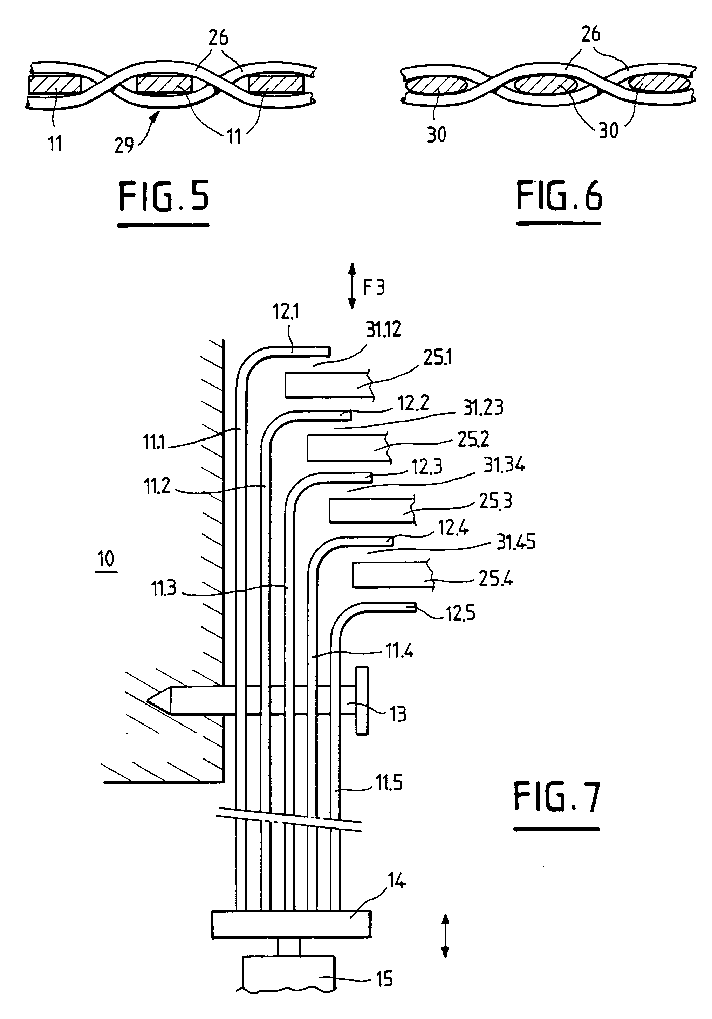

Comme l'illustre la figure 5, le tissage 29 obtenu est tel que les tiges 11 forment les fils de chaîne, tandis que les spires de la mèche de filaments 26 forment les fils de trame.

Les tiges 11 peuvent être réalisées en une matière telle que celles-ci peuvent être maintenues en place dans le tissage 29, comme constituant de celui-ci, après séparation du tissage 29 du mandrin 10. Par exemple, la mèche de filaments 26 et les tiges 11 sont alors constitués de fibres de verre, de silice, de carbone, de carbure de silicium, d'alumine, etc ...

Au contraire, les tiges 11 peuvent être en une matière, par exemple métallique, ne pouvant pas faire partie de l'armature définitive. Dans ce dernier cas, il est nécessaire de remplacer chaque tige 11 par une mèche 30 de fibres appropriées. Ceci peut être simplement obtenu en fixant de telles mèches de fibres à l'extrémité inférieure desdites tiges, puis en tirant celles-ci à travers les spires de la mèche de filaments 26, avant élimination du mandrin 10. Ainsi, on obtient, à la fois, l'élimination des tiges 11 et leur remplacement par des mèches fibreuses 30. La figure 6 illustre le tissage 29 pourvu de telles mèches fibreuses 30.

Après élimination du mandrin 10, l'armature 29 peut subir toutes les opérations usuelles d'imprégnation par un liant, de polymérisation, de densification, etc ... à partir desquelles ladite armature est apte à former une pièce composite rigide désirée.

Dans le mode de réalisation de l'invention décrit ci-dessus, toutes les tiges 11 sont supposées identiques. En revanche, dans la variante de réalisation illustrée schématiquement sur la figure 7, on prévoit plusieurs ensembles 11.i (avec i = 1, 2, 3, 4 et 5 sur la figure) de tiges 11 de longueurs différentes. Chacun desdits ensembles comporte une pluralité de tiges 11 identiques (à la manière de la pluralité des tiges 11 des figures 1 à 5), mais les tiges d'un ensemble ont une longueur différente de celles d'un des autres ensembles.

Les extrémités inférieures de toutes les tiges de tous les ensembles 11.i se trouvent sensiblement dans le même plan horizontal, pour pouvoir être remontées (de la façon décrite ci-dessus à propos des tiges 11) par la lame vibrante 14. Les tiges 11.1 les plus longues se trouvent directement au contact du mandrin 10. Les tiges 11.2, dont la longueur est juste inférieure à celle des tiges 11.1, se trouvent du côté de celles-ci opposé au mandrin 10, de sorte que les bouts recourbés 12.1 des tiges 11.1 et les bouts recourbés 12.2 des tiges 11.2 forment entre eux un espace 31.12 ouvert vers l'extérieur. De façon identique, les bouts recourbés 12.3, 12.4 et 12.5 des tiges de longueur successive 11.3, 11.4 et 11.5 forment entre eux, deux à deux, des espaces respectifs 31.23, 31.34 et 31.45 ouverts vers l'extérieur, semblables à l'espace 31.12.

Ainsi, il est possible de déposer simultanément une pluralité de mèches de filaments 26 (non représentées sur la figure 6), chacune provenant d'un guide-fil 25.1 à 25.4. Il est avantageux, comme on le verra ci-après, que les guide-fil 25.1 à 25.4 soient solidaires entre eux.

Par référence à ce qui a été décrit ci-dessus, on comprendra aisément que les mèches de filaments 26 forment autour du mandrin 10 des spires pouvant passer entre le mandrin 10 et les tiges 11.1 ou entre deux quelconques des tiges de deux ensembles 11.1 à 11.5.

On obtient ainsi des tissages à épaisseur multiple.

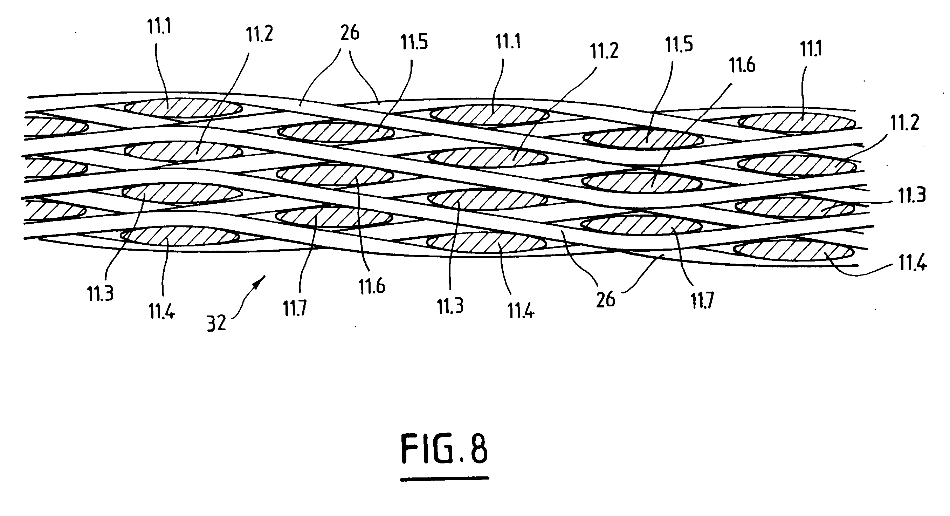

Par ailleurs, comme l'illustre la figure 8, il est possible de faire varier alternativement, le long de la périphérie du mandrin 10, le nombre i des ensembles de tiges 11, ainsi que de décaler l'un par rapport à l'autre deux groupes de tiges 11 consécutifs. Cette figure 8 concerne un motif d'armature décrit dans le brevet français FR-A-2 610 951.

Pour obtenir le tissage 32 de la figure 8, on utilise sept ensembles de tiges 11, respectivement référencées 11.1 à 11.7.

Les ensembles de tiges 11.1 à 11.4 forment des ensembles de quatre tiges disposées de la manière représentée sur la figure 6. De même, les ensembles de tiges 11.5 à 11.7 forment des ensembles de trois tiges disposées comme sur la figure 6. De plus, les groupes de quatre tiges 11.1 à 11.4 et les groupes de trois tiges 11.5 à 11.7 sont respectivement alternés le long de la périphérie du mandrin et décalés radialement, de façon que les tiges 11.5, 11.6 et 11.7 se trouvent, en position radiale, respectivement entre les tiges 11.1 et 11.2, 11.2 et 11.3 et 11.3 et 11.4.

Sur la figure 8, la section des tiges 11.1 à 11.7 présentent le profil des mèches de fils (identiques aux fils 30) destinées à les remplacer.

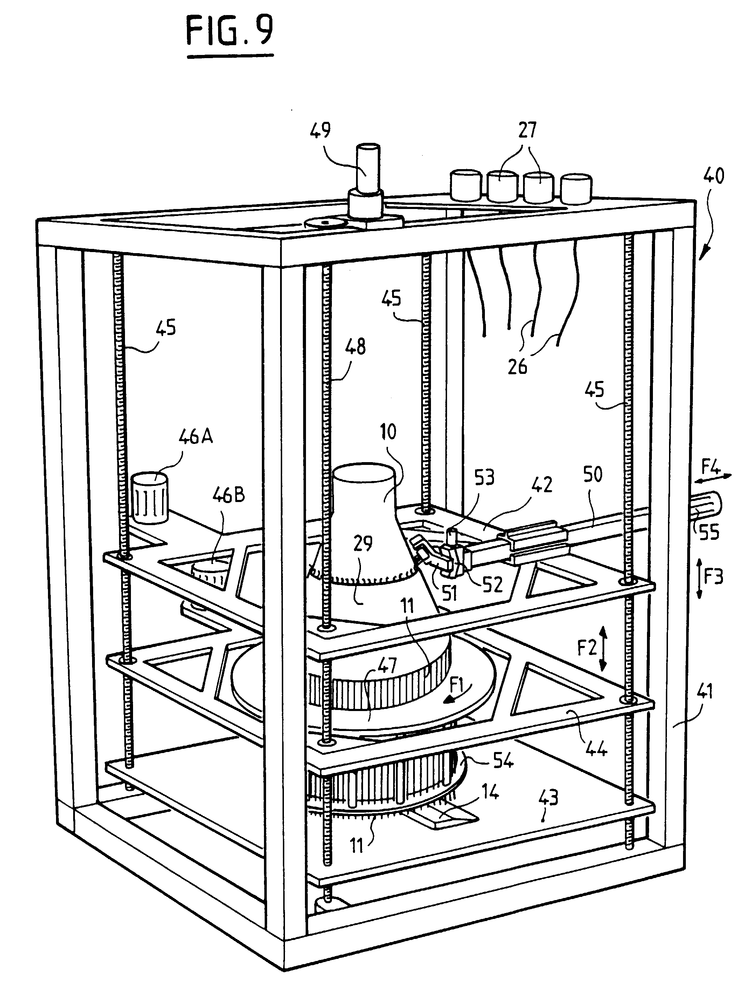

La variante de réalisation 40 de la machine selon l'invention montrée par la figure 9 comporte un bâti 41 en forme de cage, à l'intérieur duquel sont montés deux plateaux extrêmes 42 et 43 et un plateau intermédiaire 44. Le plateau extrême inférieur est fixé le long de colonnes filetées fixes 45 solidaires du bâti 41, tandis que le plateau extrême supérieur 42 et le plateau intermédiaire 44 peuvent coulisser le long desdites colonnes filetées 45 sous l'action de moteurs respectifs 46A et 46B portés par lesdits plateaux et entraînant des écrous montés rotatifs sur ces derniers (ces écrous n'étant pas visibles sur la figure car incorporés aux plateaux 42 et 44). Par exemple, les moteurs 46A et 46B, grâce à un pignon, mettent en mouvement une chaîne en boucle fermée avec laquelle engrènent des pignons entraînant eux-mêmes lesdits écrous en rotation.

Par ailleurs, le plateau intermédiaire mobile 44 porte un disque 47, monté (de toute manière connue non représentée) pour pouvoir tourner dans son plan par rapport audit plateau intermédiaire mobile 44. La mise en rotation du disque 47 est obtenue à partir d'un arbre 48, lui-même entraîné en rotation par un système moteur 49, disposé à la partie supérieure du bâti 41.

Sur le plateau supérieur 42 est monté un bras 50 (équivalent du bras 22) portant, à son extrémité libre dirigée vers l'intérieur du bâti 41, une tête de dépose de mèches de filaments 51 reliée audit bras par une articulation à rotule 52. La tête 51 peut être orientée grâce à un moteur 53 commandant l'articulation à rotule 52.

Le disque rotatif 47 porte le mandrin 10, lui-même équipé des tiges 11. Les extrémités inférieures de celles-ci sont proches du plateau inférieur 43, dans lequel est disposée la lame vibrante 14.

Un ou plusieurs disques 54, semblables au disque 16, prévus pour guider les extrémités inférieures des tiges 11, tournent en synchronisme avec le disque rotatif 47.

Des bobines de mèches de filaments 27 sont disposées à la partie supérieure du bâti 41 pour alimenter la tête 51 en mèches de filaments 26.

On voit ainsi que les déplacements correspondant aux flèches F1, F2 et F3, décrits en regard de la figure 1, sont respectivement assurés par la rotation du disque 47, par la translation de celui-ci (en synchronisme avec le plateau intermédiaire 44) le long des colonnes filetées 45 et par la translation dudit plateau supérieur 42 le long desdites colonnes. Le déplacement du bras 50, correspondant à la flèche F4, est obtenu par la commande d'un moteur 55.

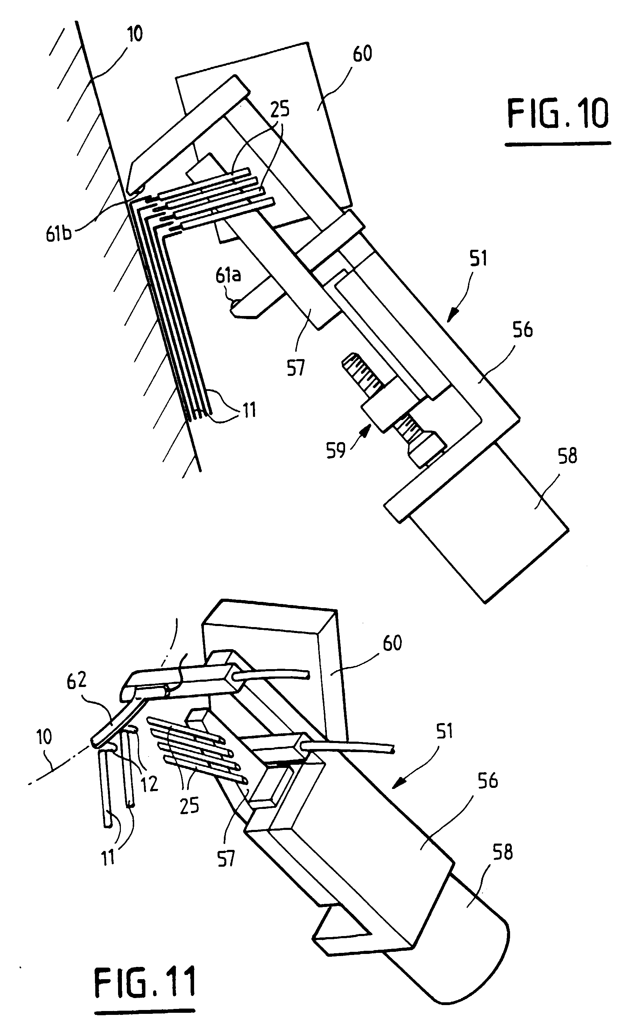

Comme le montrent les figures 10 et 11, la tête de dépose 51 comporte un bâti 56, relié à la rotule 52. Sur le bâti 56 est montée une coulisse 57, actionnable par un moteur 58 par l'intermédiaire d'une transmission 59. La partie mobile de la coulisse porte une pluralité de guide-fil 25, chacun susceptible d'être alimenté en continu par une mèche de filaments 26, à partir d'une bobine 27.

On voit qu'ainsi, par commande du moteur 58, il est possible d'ajuster rapidement et finement la hauteur des guide-fil 25 par rapport aux bouts recourbés 12, suivant la flèche F3.

Par ailleurs, le bâti 56 de la tête de dépose 51 porte un capteur 60 pour mesurer la distance entre ladite tête de dépose 51 et le mandrin 10, un capteur 61a,61b pour détecter le passage des groupes radiaux des tiges 11 et un palpeur 62 pour détecter les bouts recourbés 12.

On comprend ainsi aisément qu'un automate programmable peut commander les différents moteurs 46A,46B,53,55,58, en fonction des informations fournies par les capteurs 60 et 61a-61b et par le palpeur 62, pour faire effectuer à la machine 40 le mode de tissage désiré, après mise en rotation du mandrin 10 et activation de la rampe vibrante 14.

## Revendications

1. Procédé pour la réalisation d'une armature fibreuse creuse à l'aide d'un mandrin (10),
caractérisé en ce que :
- on répartit, à la périphérie dudit mandrin (10), une pluralité de tiges souples (11), pourvues à l'une de leurs extrémités d'un bout recourbé (12), de façon qu'au moins lesdites extrémités à bout recourbé soient appliquées contre ledit mandrin avec leur bout recourbé faisant saillie vers l'extérieur par rapport audit mandrin ;
- on enroule au moins une mèche de filaments continue (26) autour des bouts recourbés desdites tiges ; et
- au fur et à mesure de l'enroulement de ladite mèche de filaments (26) autour desdits bouts recourbés, on déplace lesdites tiges (11) le long dudit mandrin (10) pour dégager de la mèche de filaments déjà enroulée lesdits bouts recourbés desdites tiges, de sorte que l'on forme progressivement un entrelacs de filaments incorporant lesdites tiges et s'appuyant contre ledit mandrin.

2. Procédé selon la revendication 1,
caractérisé en ce que les bouts recourbés (12) desdites tiges souples (11) se trouvent au même niveau le long de l'axe dudit mandrin (10).

3. Procédé selon la revendication 1,
caractérisé en ce que les bouts recourbés (12) desdites tiges souples (11) sont étagés le long de l'axe dudit mandrin (10).

4. Procédé selon la revendication 1,
caractérisé en ce que ladite pluralité de tiges souples (11) est composée de plusieurs ensembles de tiges (11.1 à 11.7), les bouts recourbés des tiges d'un ensemble étant toutes au même niveau le long de l'axe dudit mandrin (10), mais chacun desdits ensembles présentant les bouts recourbés (12) de ses tiges (11) à un niveau différent de celui des autres ensembles.

5. Procédé selon la revendication 4,
caractérisé en ce que les tiges de plusieurs desdits ensembles (11.1 à 11.4 ou 11.5 à 11.7) forment des groupes radiaux dans lesquels lesdites tiges sont radialement superposées.

6. Procédé selon la revendication 5,
caractérisé en ce que les groupes de tiges radialement superposées comportent, alternativement le long de la périphérie dudit mandrin, des nombres de tiges superposées différents.

7. Procédé selon la revendication 6,
caractérisé en ce que les tiges de groupes périphériquement consécutifs sont décalées radialement.

8. Procédé selon la revendication 7,
caractérisé en ce que, dans deux groupes périphériquement consécutifs, les tiges du groupe le moins nombreux sont radialement disposées entre deux tiges du groupe le plus nombreux.

9. Procédé selon l'une quelconque des revendications 1 à 8,
caractérisé en ce que lesdites tiges souples sont maintenues en place dans ledit enroulement de la mèche de filaments afin de faire partie intégrante de ladite armature.

10. Procédé selon l'une quelconque des revendications 1 à 8,
caractérisé en ce que lesdites tiges souples sont séparées dudit enroulement de la mèche de filaments et remplacées par des mèches de fibres.

11. Procédé selon l'une quelconque des revendications 1 à 10,
caractérisé en ce que ledit mandrin (10) est entraîné en rotation autour de son axe.

12. Procédé selon l'une quelconque des revendications 1 à 11,
caractérisé en ce que l'on prévoit une surface de butée (14) pour les extrémités desdites tiges opposées auxdits bouts recourbés (12) et en ce qu'on déplace ledit mandrin, au fur et à mesure de l'enroulement de ladite mèche de filaments, en direction de ladite surface de butée (14).

13. Machine pour la réalisation d'une armature fibreuse creuse à l'aide d'un mandrin (10), comportant une pluralité de tiges souples et des moyens d'enroulement pour enrouler au moins une mèche de filaments continue,
caractérisée en ce que :
- lesdites tiges souples (11) sont pourvues à l'une de leurs extrémités d'un bout recourbé (12) et sont réparties à la périphérie dudit mandrin (10), au moins lesdites extrémités à bouts recourbés étant appliquées contre ledit mandrin avec leur bout recourbé faisant saillie vers l'extérieur ;
- lesdits moyens d'enroulement enroulent ladite mèche de filaments continue (26) autour des bouts recourbés (12) desdites tiges ; et
- il est prévu des moyens pour déplacer lesdites tiges (11) le long dudit mandrin (10) au fur et à mesure de l'enroulement de ladite mèche de filaments.

14. Machine selon la revendication 13,
caractérisée en ce que lesdits moyens pour enrouler ladite mèche de filaments continue comportent des moyens (5,6,7 - 47,48,49) pour entraîner ledit mandrin (10) en rotation autour de son axe et des moyens à poste fixe (19 à 25 - 50 à 52) pour déposer ladite mèche de filaments (26) sur ledit mandrin rotatif (10), autour desdits bouts recourbés des tiges.

15. Machine selon la revendication 14,
caractérisé en ce que l'axe de rotation dudit mandrin (10) est vertical.

16. Machine selon l'une quelconque des revendications 13 à 15,
caractérisé en ce que lesdits moyens pour déplacer lesdites tiges le long du mandrin au fur et à mesure de l'enroulement de ladite mèche de filaments comportent une surface de butée (14) pour les extrémités desdites tiges opposées auxdits bouts recourbés (12) et des moyens (2 - 44 à 46) pour déplacer ledit mandrin, au fur et à mesure de l'enroulement de ladite mèche de filaments, en direction de ladite surface de butée (14).

17. Machine selon les revendications 14 et 16,
caractérisée en ce que ladite surface de butée (14) présente la forme d'une rampe.

18. Machine selon la revendication 17,
caractérisée en ce que ladite rampe (14) est vibrée.

19. Machine selon les revendications 14 et 16,
caractérisée en ce que lesdits moyens pour entraîner ledit mandrin (10) en rotation autour de son axe et lesdits moyens pour déplacer ledit mandrin en direction de ladite surface de butée (14) comportent un vérin (2), entraîné en rotation autour de son axe (Z-Z).

20. Machine selon les revendications 14 et 16,
caractérisée en ce que lesdits moyens pour entraîner ledit mandrin (10) en rotation autour de son axe et lesdits moyens pour déplacer ledit mandrin en direction de ladite surface de butée (14) comportent un disque (47) monté rotatif par rapport à un plateau (44), susceptible de se déplacer parallèlement à son plan.

21. Machine selon l'une quelconque des revendications 14 à 20,
caractérisée en ce que ladite pluralité de tiges souples (11) est composée de plusieurs ensembles de tiges (11.1 à 11.7), les bouts recourbés des tiges d'un ensemble étant tous au même niveau le long de l'axe dudit mandrin (10), mais chacun desdits ensembles présentant les bouts recourbés (12) de ses tiges (11) à un niveau différent de celui des autres ensembles, et en ce que ladite machine comporte plusieurs guide-fil (25), dont chacun d'eux est susceptible de déposer une mèche de filaments continue sur ledit mandrin, autour de bouts recourbés desdites tiges.

22. Machine selon la revendication 21,
caractérisée en ce que lesdits guide-fil (25) sont mécaniquement solidaires les uns des autres.

23. Machine selon l'une quelconque des revendications 14 à 22,
caractérisée en ce que lesdits moyens à poste fixe pour déposer la mèche de filaments sur le mandrin rotatif comportent une tête de dépose (51), pourvue d'un capteur (60) mesurant la distance entre ladite tête de dépose et ledit mandrin, d'un capteur (61a,61b) détectant le défilement périphérique desdites tiges (11) et d'un capteur (62) détectant lesdits bouts recourbés des tiges (11).

24. Machine selon la revendication 23,
caractérisée en ce que ladite tête de dépose (51) comporte au moins un guide-fil (25), ainsi que des moyens (57,58,59) pour déplacer ledit guide-fil parallèlement auxdites tiges (11).

25. Machine selon l'une des revendications 23 ou 24,
caractérisée en ce que ladite tête de dépose (51) est orientable.

## Patentansprüche

1. Verfahren zur Herstellung einer hohlen Faserarmierung mit Hilfe eines Dorns (10),
dadurch gekennzeichnet, daß:
- am Umfang des Dorns (10) eine Vielzahl flexibler Stangen (11) verteilt ist, die an einem ihrer Enden einen abgebogenen Abschnitt (12) haben, so daß mindestens die Enden mit dem abgebogenen Abschnitt, der bezogen auf den Dorn nach außen absteht, am Dorn anliegen;
- mindestens eine endlose Filamentlunte (26) um die abgebogenen Abschnitte der Stangen gewickelt wird und
- die Stangen (11) entsprechend der Wicklung der Filamentlunte (26) um die abgebogenen Abschnitte am Dorn (10) verschoben werden, um von den abgebogenen Abschnitten der Stangen die bereits aufgewickelte Filamentlunte zu entfernen, so daß allmählich ein Filamentflechtwerk mit den darin enthaltenen Stangen entsteht, das am Dorn anliegt.

2. Verfahren nach Anspruch 1,
dadurch gekennzeichnet, daß sich die abgebogenen Abschnitte (12) der flexiblen Stangen (11) längs der Achse von Dorn (10) in gleicher Höhe befinden.

3. Verfahren nach Anspruch 1,
dadurch gekennzeichnet, daß die abgebogenen Abschnitte (12) der flexiblen Stangen (11) längs der Achse von Dorn (10) abgestuft sind.

4. Verfahren nach Anspruch 1,
dadurch gekennzeichnet, daß die Vielzahl flexibler Stangen (11) aus mehreren Komplexen von Stangen (11.1 bis 11.7) besteht, alle abgebogenen Abschnitte der Stangen eines Komplexes längs der Achse des Dorns (10) die gleiche Höhe haben, die abgebogenen Abschnitte (12) der Stangen (11) eines gegebenen Komplexes jedoch eine andere Höhe als die der anderen Komplexe haben.

5. Verfahren nach Anspruch 4,
dadurch gekennzeichnet, daß die Stangen mehrerer Komplexe (11.1 bis 11.4 oder 11.5 bis 11.7) radiale Gruppen bilden, in denen die Stangen radial übereinander angeordnet sind.

6. Verfahren nach Anspruch 5,
dadurch gekennzeichnet, daß die Gruppen der radial übereinander angeordneten Stangen am Dornumfang im Wechsel aus einer unterschiedlichen Anzahl übereinander angeordneter Stangen bestehen.

7. Verfahren nach Anspruch 6,
dadurch gekennzeichnet, daß die Stangen der am Umfang aufeinanderfolgenden Gruppen radial versetzt sind.

8. Verfahren nach Anspruch 7,
dadurch gekennzeichnet, daß in zwei am Umfang aufeinanderfolgenden Gruppen die Stangen der zahlenmäßig kleineren Gruppe radial zwischen zwei Stangen der zahlenmäßig größeren Gruppe angeordnet sind.

9. Verfahren nach einem der Ansprüche 1 bis 8,
dadurch gekennzeichnet, daß die flexiblen Stangen in der Wicklung der Filamentlunte verbleiben und Bestandteil der Armierung sind.

10. Verfahren nach einem der Ansprüche 1 bis 8,
dadurch gekennzeichnet, daß die flexiblen Stangen von der Wicklung der Filamentlunte getrennt und durch Faserlunten ersetzt werden.

11. Verfahren nach einem der Ansprüche 1 bis 10,
dadurch gekennzeichnet, daß der Dorn (10) um seine Achse in Drehung versetzt wird.

12. Verfahren nach einem der Ansprüche 1 bis 11,
dadurch gekennzeichnet, daß für die Enden der Stangen, die den gebogenen Abschnitten (12) entgegengesetzt sind, eine Anschlagfläche (14) vorgesehen ist, und dadurch, daß der Dorn entsprechend der Filamentluntenwicklung in Richtung der Anschlagfläche (14) verschoben wird.

13. Maschine zur Verwirklichung einer hohlen Faserarmierung mit Hilfe eines Dorns (10), mit einer Vielzahl flexibler Stangen und Wickelmitteln für mindestens eine endlose Filamentlunte,
dadurch gekennzeichnet, daß:
- die flexiblen Stangen (11) an einem ihrer Enden einen abgebogenen Abschnitt (12) haben und am Umfang des Dorns (10) verteilt sind, wobei zumindest die Enden mit den abgebogenen Abschnitten mit ihrem nach außen abstehenden abgebogenen Abschnitt am Dorn anliegen;
- die Wickelmittel die endlose Filamentlunte (26) um die gebogenen Abschnitte (12) der Stangen wickeln und
- Mittel vorgesehen sind, um die Stangen (11) entsprechend der Aufwicklung der Filamentlunte am Dorn (10) zu verschieben.

14. Maschine nach Anspruch 13,
dadurch gekennzeichnet, daß die Mittel zum Aufwickeln der endlosen Filamentlunte Mittel (5,6,7; 47,48,49) haben, um den Dorn (10) um seine Achse in Drehung zu versetzen, und feststehende Mittel (19 bis 25; 50 bis 52), um die Filamentlunte (26) um die abgebogenen Abschnitte der Stangen am Drehdorn (10) zu legen.

15. Maschine nach Anspruch 14,
dadurch gekennzeichnet, daß die Drehachse des Dorns (10) senkrecht verläuft.

16. Maschine nach einem der Ansprüche 13 bis 15,
dadurch gekennzeichnet, daß die Mittel zur Verschiebung der Stangen am Dorn entsprechend der Filamentluntenwicklung eine Anschlagfläche (14) für die Enden der Stangen, die den abgebogenen Abschnitten (12) entgegengesetzt sind, und Mittel (2; 44 bis 46) zur Verschiebung des Dorns entsprechend der Filamentluntenwicklung in Richtung der Anschlagfläche (14) haben.

17. Maschine nach den Ansprüchen 14 und 16,
dadurch gekennzeichnet, daß die Anschlagfläche (14) die Form einer Schräge hat.

18. Maschine nach Anspruch 17,
dadurch gekennzeichnet, daß die Schräge (14) schwingt.

19. Maschine nach den Ansprüchen 14 und 16,
dadurch gekennzeichnet, daß die Mittel, mit denen der Dorn (10) um seine Achse in Drehung versetzt wird, und die Mittel zur Verschiebung des Dorns in Richtung der Anschlagfläche (14) einen Arbeitszylinder (2) haben, der um seine Achse (Z-Z) in Drehung versetzt wird.

20. Maschine nach den Ansprüchen 14 und 16,
dadurch gekennzeichnet, daß die Mittel, mit denen der Dorn (10) um seine Achse in Drehung versetzt wird, und die Mittel zur Verschiebung des Dorns in Richtung der Anschlagfläche (14) eine Scheibe (47) haben, die drehbar gegenüber einer Platte (44) angebracht ist, die parallel zu ihrer Ebene verschoben werden kann.

21. Maschine nach einem der Ansprüche 14 bis 20,
dadurch gekennzeichnet, daß die Vielzahl flexibler Stangen (11) aus mehreren Komplexen von Stangen (11.1 bis 11.7) besteht, wobei sich alle abgebogenen Abschnitte der Stangen eines Komplexes an der Achse des Dorns (10) in der gleichen Höhe befinden, die abgebogenen Abschnitte (12) der Stangen (11) jedes Komplexes jedoch eine andere Höhe als die der anderen Komplexe haben, und dadurch daß die Maschine mehrere Fadenführer (25) hat, die am Dorn um die abgebogenen Abschnitte der Stangen jeweils eine endlose Filamentlunte ablegen können.

22. Maschine nach Anspruch 21,
dadurch gekennzeichnet, daß die Fadenführer (25) mechanisch miteinander verbunden sind.

23. Maschine nach einem der Ansprüche 14 bis 22,
dadurch gekennzeichnet, daß die feststehenden Mittel zur Ablage der Filamentlunte am Drehdorn einen Ablagekopf (51) mit einem Sensor (60) zur Messung des Abstands zwischen dem Ablagekopf und dem Dorn, einen Sensor (61a,61b) zur Erfassung des Vorbeilaufs der Stangen (11) am Dornumfang und einen Sensor (62) zur Erfassung der abgebogenen Abschnitte der Stangen (11) haben.

24. Maschine nach Anspruch 23,
dadurch gekennzeichnet, daß der Ablagekopf (51) mindestens einen Fadenführer (25) sowie Mittel (57,58,59) zur Verschiebung des Fadenführers parallel zu den Stangen (11) hat.

25. Maschine nach einem der Ansprüche 23 oder 24,
dadurch gekennzeichnet, daß der Ablagekopf (51) verstellbar ist.

## Claims

1. Process for the manufacture of a hollow fibrous reinforcement by the use of a mandrel (10), characterized in that:
- a plurality of flexible rods (11), provided at one of their extremities with a bent-over end (12), are distributed around the periphery of the said mandrel (10) so that at least the said extremities with a bent-over end are applied against the said mandrel with their bent-over end projecting outwards with respect to the said mandrel;
- at least one continuous filament roving (26) is wound around the bent-over ends of the said rods; and
- as the said filament roving (26) is being wound around the said bent-over ends, the said rods (11) are moved along the said mandrel (10) in order to disengage the said bent-over ends of the said rods from the filament roving already wound, so that an interlacement of filaments, incorporating the said rods and bearing against the said mandrel, is progressively formed.

2. Process according to Claim 1, characterized in that the bent-over ends (12) of the said flexible rods (11) lie at the same level along the axis of the said mandrel (10).

3. Process according to Claim 1, characterized in that the bent-over ends (12) of the said flexible rods (11) are staggered along the axis of the said mandrel (10).

4. Process according to Claim 1, characterized in that the said plurality of flexible rods (11) is composed of several sets (11.1 to 11.7) of rods, the bent-over ends of the rods of one set all being at the same level along the axis of the said mandrel (10), but each of the said sets having the bent-over ends (12) of its rods (11) at a different level from that of the other sets.

5. Process according to Claim 4, characterized in that the rods of several of the said sets (11.1 to 11.4 or 11.5 to 11.7) form radial groups in which the said rods are radially superimposed.

6. Process according to Claim 5, characterized in that the groups of radially superimposed rods include, alternately along the periphery of the said mandrel, different numbers of superimposed rods.

7. Process according to Claim 6, characterized in that the rods of peripherally consecutive groups are radially offset.

8. Process according to Claim 7, characterized in that, in two peripherally consecutive groups, the rods of the lesser endowed group are arranged radially between two rods of the greater endowed group.

9. Process according to any one of Claims 1 to 8, characterized in that the said flexible rods are held in place in the said filament roving winding so as to form an integral part of the said reinforcement.

10. Process according to any one of Claims 1 to 8, characterized in that the said flexible rods are separated from the said filament roving winding and replaced by fibre rovings.

11. Process according to any one of Claims 1 to 10, characterized in that the said mandrel (10) is driven in rotation about its axis.

12. Process according to any one of Claims 1 to 11, characterized in that a stop surface (14) is provided for those extremities of the said rods opposite to the said bent-over ends (12) and in that the said mandrel is moved towards the said stop surface (14) as the said filament roving is being wound.

13. Machine for the manufacture of a hollow fibrous reinforcement by the use of a mandrel (10), including a plurality of flexible rods and winding means for winding at least one continuous filament roving, characterized in that:
- the said flexible rods (11) are provided at one of their extremities with a bent-over end (12) and are distributed around the periphery of the said mandrel (10), at least the said extremities with bent-over ends being applied against the said mandrel with their bent-over end projecting outwards;
- the said winding means wind the said continuous filament roving (26) around the bent-over ends (12) of the said rods; and
- means are provided for moving the said rods (11) along the said mandrel (10) as the said filament roving is being wound.

14. Machine according to Claim 13, characterized in that the said means for winding the said continuous filament roving include means (5, 6, 7 - 47, 48, 49) for driving the said mandrel (10) in rotation about its axis and fixed-station means (19 to 25 - 50 to 52) for depositing the said filament roving (26) onto the said rotary mandrel (10) around the said bent-over ends of the rods.

15. Machine according to Claim 14, characterized in that the axis of rotation of the said mandrel (10) is vertical.

16. Machine according to any one of Claims 13 to 15, characterized in that the said means for moving the said rods along the mandrel as the said filament roving is being wound include a stop surface (14) for those extremities of the said rods opposite to the said bent-over ends (12) and means (2 - 44 to 46) for moving the said mandrel towards the said stop surface (14) as the said filament roving is being wound.

17. Machine according to Claims 14 and 16, characterized in that the said stop surface (14) has the shape of a ramp.

18. Machine according to Claim 17, characterized in that the said ramp (14) is vibrated.

19. Machine according to Claims 14 and 16, characterized in that the said means for driving the said mandrel (10) in rotation about its axis and the said means for moving the said mandrel towards the said stop surface (14) include a thrust-cylinder (2) which is driven in rotation about its axis (Z-Z).

20. Machine according to Claims 14 and 16, characterized in that the said means for driving the said mandrel (10) in rotation about its axis and the said means for moving the said mandrel towards the said stop surface (14) include a disc (47) mounted so as to rotate with respect to a support plate (44) capable of moving parallel to its plane.

21. Machine according to any one of Claims 14 to 20, characterized in that the said plurality of flexible rods (11) is composed of several sets (11.1 to 11.7) of rods, the bent-over ends of the rods of one set all being at the same level along the axis of the said mandrel (10), but each of the said sets having the bent-over ends (12) of its rods (11) at a different level from that of the other sets, and in that the said machine includes several yarn guides (25), each of which is capable of depositing a continuous filament roving onto the said mandrel around bent-over ends of the said rods.

22. Machine according to Claim 21, characterized in that the said yarn guides (25) are mechanically fastened to one another.

23. Machine according to any one of Claims 14 to 22, characterized in that the said fixed-station means for depositing the filament roving onto the rotary mandrel include a depositing head (51) provided with a sensor (60) which measures the distance between the said depositing head and the said mandrel, with a sensor (61a, 61b) which detects the peripheral motion of the said rods (11) and with a sensor (62) which detects the said bent-over ends of the rods (11).

24. Machine according to Claim 23, characterized in that the said depositing head (51) includes at least one yarn guide (25) as well as means (57, 58, 59) for moving the said yarn guide parallel to the said rods (11).

25. Machine according to either of Claims 23 and 24, characterized in that the said depositing head (51) can be oriented.
